# EUROPEAN PATENT SPECIFICATION

(11) **EP 3 604 727 B1**
(45) Date of publication and mention of the grant of the patent: **02.12.2020**
(21) Application number: 18777501.0
(22) Date of filing: 20.02.2018
(51) Int. Cl.: E06B 3/663, C03C 27/06, E06B 3/66, E06B 3/67

(54) **GLASS PANEL UNIT AND GLASS WINDOW**
GLASSCHEIBENEINHEIT UND GLASFENSTER
UNITÉ DE PANNEAU DE VERRE ET FENÊTRE EN VITRE

(30) Priority: 31.03.2017 JP 2017072696
(43) Date of publication of application: 05.02.2020
(73) Proprietor: Panasonic Intellectual Property Management Co., Ltd., Osaka-shi, Osaka 540-6207 (JP)
(72) Inventor: ABE, Hiroyuki, Osaka-shi, Osaka 540-6207 (JP); URIU, Eiichi, Osaka-shi, Osaka 540-6207 (JP); HASEGAWA, Kazuya, Osaka-shi, Osaka 540-6207 (JP); ISHIBASHI, Tasuku, Osaka-shi, Osaka 540-6207 (JP); NONAKA, Masataka, Osaka-shi, Osaka 540-6207 (JP); ISHIKAWA, Haruhiko, Osaka-shi, Osaka 540-6207 (JP); SHIMIZU, Takeshi, Osaka-shi, Osaka 540-6207 (JP)
(74) Representative: Müller-Boré & Partner Patentanwälte PartG mbB
(86) International application number: PCT/JP2018/005827
(87) International publication number: WO 2018/179994

(56) References cited:
- EP-A1- 1 018 493
- EP-A1- 1 544 180
- WO-A1-98/56727
- WO-A1-2016/084382
- WO-A1-2016/084382
- JP-A- H10 507 500
- JP-A- 2003 212 611
- JP-A- 2014 148 867

## Description

### Technical Field

The present disclosure relates to a glass panel unit and a glass window.

### Background Art

A glass panel unit has been known which includes: a pair of glass plates between which an inside space in a reduced pressure state is formed; and a plurality of spacers disposed in the inside space.

Patent Literature 1 describes that a glass panel unit as described above may adopt ground glass as a glass plate.

As described above, when a glass plate having a rough surface having fine recesses and projections is adopted as the glass plate, the spacers are pressed against the rough surface, and the spacers are more likely to be damaged. To avoid this problem, the rough surface may be disposed to face outside but not inside the glass panel unit. However, in this case, when water adheres to the rough surface, the glass plate easily becomes see-through.

EP1544180A1 relates to a glass panel and a method of manufacturing a glass panel, in which the glass panel comprises a pair of glass plates defining a void between opposing faces thereof, and a sealing portion provided in outer peripheries of the pair of glass plates for sealing the void, with the void being decompressed.

WO2016/084382A1 and EP1018493A1 also relate to glass panel units.

### Citation List

### Patent Literature

Patent Literature 1: JP 2007-182752 A

### Summary of Invention

It is an object of the present disclosure to provide a glass panel unit and a glass window in which it is possible to suppress the glass plate from becoming see-through in the case of water adhering to the glass plate and to suppress pillars disposed in an inside space in a reduced pressure state from being damaged.

A glass panel unit according to a first aspect of the present disclosure includes a first substrate, a second substrate, a seal member having a frame shape, and a plurality of pillars.

The first substrate includes a first glass plate. The second substrate includes a second glass plate. The second substrate is located to face the first substrate. The seal member hermetically binds peripheral portions of the first substrate and the second substrate together to form an inside space hermetically closed in a reduced pressure state between the first substrate and the second substrate. Each of the plurality of pillars is disposed in the inside space and is in contact with facing surfaces of the first substrate and the second substrate, the facing surfaces facing each other. The facing surface of the first substrate includes a rough surface. Each of the plurality of pillars includes a body and a protection layer. The body is made of a resin. The protection layer is on the body so as to be in contact with the rough surface. The thickness of the protection layer is larger than the arithmetic mean roughness of the roughened surface.

In the first aspect, the rough surface faces the inside space, and thus, water is prevented from adhering to the rough surface. This suppresses the glass panel unit from becoming see-through due to adhesion of water. Additionally, each pillar has a portion which is pressed against the rough surface and which is provided with the protection layer. Thus, damage to each pillar is reduced. Moreover, the protection layer having a valid thickness reduces damage caused to each pillar when each pillar is pressed against the rough surface.

In a preferred embodiment of the first aspect, the body and the protection layer are made of different resins. In this embodiment, the body may be made of a resin which hardly deforms and which has a high degree of hardness, and the protection layer may be made of another resin less susceptible to damage also when being pressed against the rough surface.

In a preferred embodiment of the first aspect, the protection layer has an elongation at break higher than an elongation at break of the body. According to this embodiment, the protection layer having a high elongation at break effectively reduces damage caused to each pillar when each pillar is pressed against the rough surface.

In a preferred embodiment of the first aspect, the protection layer is made of metal. According to this embodiment, the protection layer made of metal effectively reduces damage caused to each pillar when each pillar is pressed against the rough surface.

In a preferred embodiment of the first aspect, the body is in contact with the facing surface of the second substrate. According to this embodiment, the body is in contact with the facing surface of the second substrate, the facing surface facing the first substrate.

In a preferred embodiment of the first aspect, a facing surface of a second substrate includes a rough surface, the facing surface facing the first substrate. Each of a plurality of pillars includes a first protection layer and a second protection layer. The first protection layer is the protection layer. The second protection layer is a protection layer different from the first protection layer. The second protection layer is in contact with the rough surface of the second substrate. This embodiment provides a glass panel unit in which both of the facing surfaces of the first substrate and the second substrate respectively have the rough surfaces. Moreover, the first protection layer and the second protection layer reduces damage caused to each pillar when each pillar is pressed against the rough surface.

In a preferred embodiment of the first aspect, the glass panel unit further includes a third substrate and a second seal member. The third substrate includes a third glass plate. The third substrate faces a substrate which is one of the first substrate or the second substrate. The second seal member hermetically binds the substrate and the third substrate together to form a second inside space hermetically closed between the substrate and the third substrate. According to this embodiment, thermal insulation property of the entirety of the glass panel unit is further improved.

A glass window according to a second aspect of the present disclosure includes the glass panel unit as defined above and a window frame. The glass panel unit is fit to an inner side of the window frame.

According to the second aspect, it is possible to suppress the glass panel from becoming see-through due to water adhering to the glass panel unit and to suppress each pillar disposed in the inside space from being damaged.

### Brief Description of Drawings

FIG. 1 is a plan view illustrating a glass panel unit of an embodiment;
FIG. 2 is a sectional view along line A-A of FIG. 1;
FIG. 3 is a plan view illustrating a process for manufacturing the glass panel unit;
FIG. 4 is a sectional view along line B-B of FIG. 3;
FIG. 5 is a perspective view illustrating another process for manufacturing the glass panel unit;
FIG. 6 is a sectional view illustrating a glass panel unit of a first variation;
FIG. 7 is a plan view illustrating a glass panel unit of a second variation;
FIG. 8A is a sectional view along line C-C of FIG. 7, and FIG. 8B is a sectional view illustrating a glass panel unit of another example;
FIG. 9 is a plan view illustrating a glass window including the glass panel unit of the embodiment.

### Description of Embodiments

The present disclosure relates to glass panel units and glass windows, and specifically, to a glass panel unit and glass window having an inside space in a reduced pressure state.

Based on attached drawings, a glass panel unit 90 of the present disclosure and a glass window 9 including the glass panel unit 90 will be described below. Note that the drawings schematically show components, and therefore, the dimensional shape of each component in the drawings is different from its actual dimensional shape.

### Glass Panel Unit

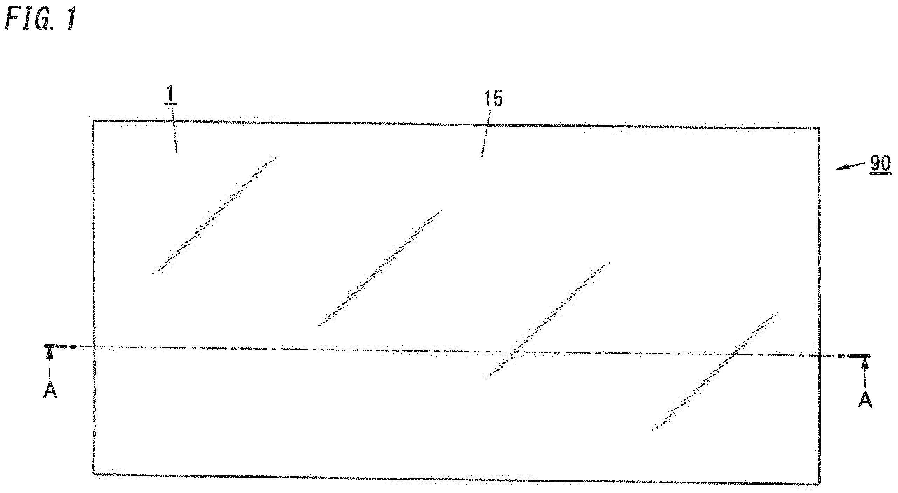

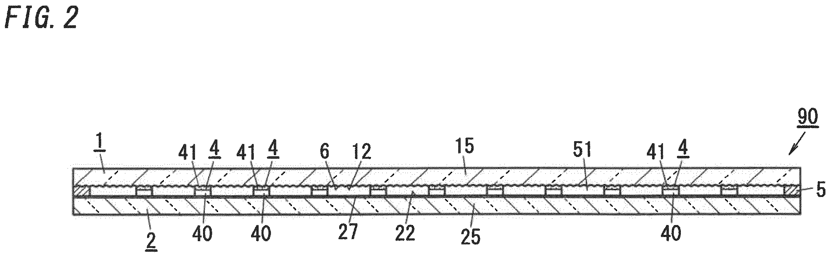

As illustrated in FIGS. 1 and 2, the glass panel unit 90 of an embodiment includes a first substrate 1, a second substrate 2, a seal member 5 having a frame shape, and a plurality of (a large number of) pillars (spacers) 4.

The first substrate 1 is parallel to the second substrate 2. The first substrate 1 and the second substrate 2 face each other.

The first substrate 1 includes a first glass plate 15. The first glass plate 15 is made of ground glass which is semi-transparent or non-transparent. The first glass plate 15 has a rough surface (uneven surface) 6 which scatters light. The rough surface 6 is one surface in a thickness direction of the first glass plate 15.

Note that the first substrate 1 includes at least the rough surface 6 and may be formed of, for example, patterned glass. The patterned glass is manufactured mainly by a roll-out method but may be manufactured by any method other than the roll-out method. Alternatively, the first substrate 1 may be formed of frosted glass or the like.

The first substrate 1 (the first glass plate 15) has a facing surface 12 which faces the second substrate 2 and which includes the rough surface 6. The rough surface 6 has a large number of fine recesses and projections formed by surface processing.

The second substrate 2 includes a second glass plate 25 and a low radiation film 27. The second glass plate 25 is a main body of the second substrate 2. The low radiation film 27 is formed (stacked) on a surface which is a surface of the second glass plate 25 and which faces the first substrate 1 (a surface on a side close to the first substrate 1). The second substrate 2 has a facing surface 22 which faces the first substrate 1 and which is a surface of the low radiation film 27 (a surface on an opposite side of the low radiation film 27 from the second glass plate 25).

Note that the second substrate 2 includes at least the second glass plate 25. For example, the second substrate 2 does not have to include the low radiation film 27. Moreover, the second glass plate 25 may be provided with another coating alternatively to the low radiation film 27 or additionally to the low radiation film 27.

The seal member 5 is sandwiched between the first substrate 1 and the second substrate 2. The seal member 5 having a frame shape is hermetically bound to an entire peripheral portion of the facing surface 12 of the first substrate 1 and is hermetically bound to an entire peripheral portion of the facing surface 22 of the second substrate 2.

The glass panel unit 90 has an inside space 51 which is formed between the first substrate 1 and the second substrate 2 and which is surrounded by the first substrate 1, the second substrate 2, and the seal member 5. The inside space 51 is hermetically sealed up with the seal member 5 in a state depressurized to a prescribed degree of vacuum.

The plurality of pillars 4 are accommodated in the inside space 51 depressurized. The plurality of pillars 4 are located in a distributed manner in the inside space 51. The distance between the first substrate 1 and the second substrate 2 is kept at a prescribed distance by the plurality of pillars 4.

Each pillar 4 includes a body 40 and a protection layer 41. The body 40 and the protection layer 41 are transparent or semi-transparent. Note that the body 40 and the protection layer 41 may be non-transparent.

The body 40 is made of a resin. The body 40 has a cylindrical shape. Note that the shape of the body 40 may be any other shape such as an elliptic cylindrical shape or a hexagonal prism shape other than the cylindrical shape.

The protection layer 41 is provided to the body 40. The protection layer 41 is made of a resin (whose molecule structure or orientation degree, for example, is) different from a resin of which the body 40 is made. The protection layer 41 is provided to an end surface which is an end surface of the body 40 having a columnar shape and which faces the first substrate 1. The protection layer 41 faces the first substrate 1.

An end surface of the body 40 (end surface on an opposite side of the body 40 from the protection layer 41) is pressed against the facing surface 22 of the second substrate 2, and an end surface of the protection layer 41 (end surface on an opposite side of the protection layer 41 from the body 40) is pressed against the facing surface 12 (the rough surface 6) of the first substrate 1, and thereby, each pillar 4 keeps the distance between the first substrate 1 and the second substrate 2.

The body 40 is made of a hard resin. The body 40 is made of a resin harder than the protection layer 41 made of, for example, polyimide having a benzoxazole structure or polyimide after stretching process.

The protection layer 41 is made of a resin having a higher elongation at break than a resin of which the body 40 is made. The elongation at break is measured based on, for example, JIS K 7161:2014.

According to the present disclosure, the protection layer 41 has a thickness (a dimension in a direction in which the first substrate 1 and the second substrate 2 face each other) set to be larger than the arithmetic mean roughness of the rough surface 6. The arithmetic mean roughness is measured based on, for example, JIS B 0601:2013.

Next, a method for manufacturing the glass panel unit 90 of the embodiment will be described.

The method for manufacturing the glass panel unit 90 includes a pillar disposition step, a binding step, an evacuation step, and a sealing step.

Moreover, the pillar disposition step will be described.

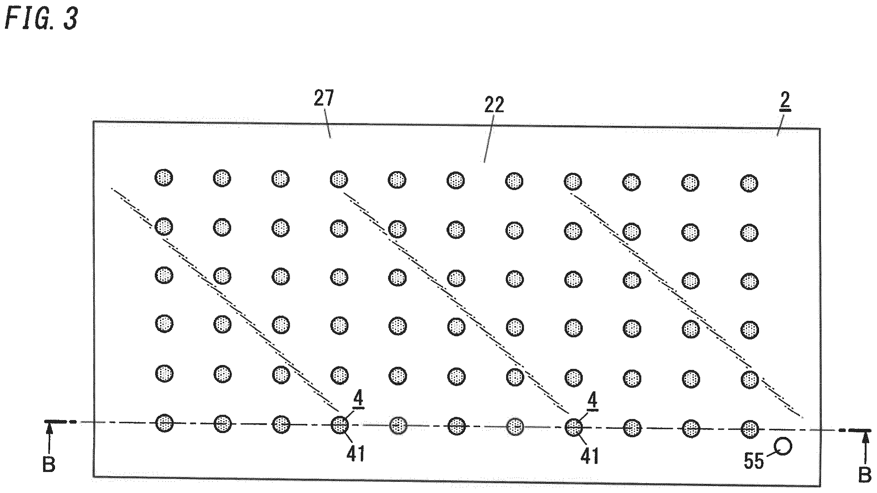

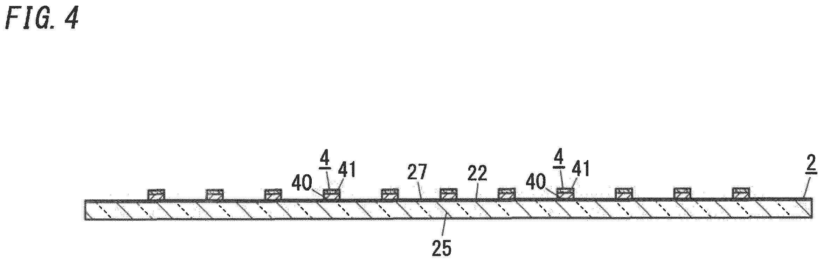

As illustrated in FIGS. 3 and 4, the pillar disposition step is a step of disposing the plurality of pillars 4 apart from one another in a matrix form such that the end surface of the body 40 of each pillar 4 abuts the surface of the second substrate 2 (the surface of the low radiation film 27).

Various types of means are available for disposition of the pillars 4. In an example of the various types of means, a resin sheet is supported above the second substrate 2, the resin sheet is punched downward with a punching device to form each pillar 4, and the punching device presses the pillar 4, as is, against the surface of the second substrate 2. In this case, a resin sheet to be punched out is preferably a resin sheet including a resin layer for forming the body 40 and a resin layer for forming the protection layer 41.

Next, the binding step will be described.

The binding step is a step of hermetically binding the first substrate 1 and the second substrate 2 disposed to face each other together with the seal member 5 having a frame shape.

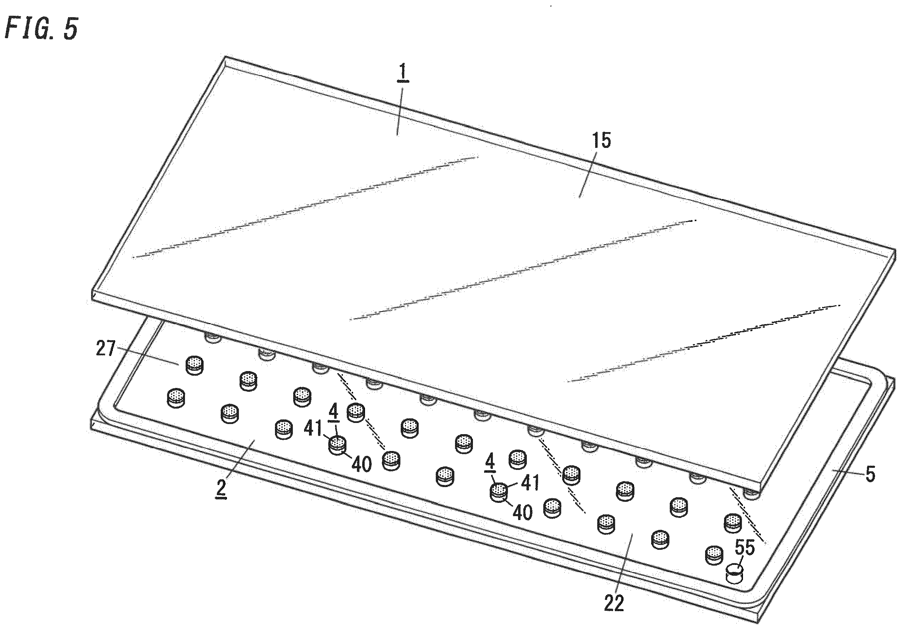

In the binding step, the first substrate 1 is disposed to face the second substrate 2 in a state where the seal member 5 is applied to a peripheral portion of the surface (the facing surface 22) which is a surface of the second substrate 2 and on which the plurality of pillars 4 are disposed (see FIG. 5). At this time, an end surface of each pillar 4 (the end surface of the protection layer 41) abuts the surface (the facing surface 12) of the first substrate 1 to keep the distance between the first substrate 1 and the second substrate 2.

The binding step is a step of heating and melting the seal member 5 having a frame shape to hermetically bind the first substrate 1 and the second substrate 2 together. Thus, a glass composite including the first substrate 1, the second substrate 2, and the seal member 5 is formed. Between the first substrate 1 and the second substrate 2 of the glass composite, the inside space 51 surrounded by the seal member 5 is formed.

Note that in the binding step, after the seal member 5 is applied to the peripheral portion of the facing surface 12 of the first substrate 1, the first substrate 1 may be disposed to face the second substrate 2 via the seal member 5.

When the binding step is completed, the inside space 51 communicates with an outside space of the glass composite via an exhaust hole 55 (see, for example, FIGS. 3 and 5) formed in the second substrate 2. Note that the exhaust hole 55 via which the inside space 51 communicates with the outside space may be formed in the first substrate 1 or may be formed in both the first substrate 1 and the second substrate 2.

Next, the evacuation step and the sealing step will be described.

The evacuation step is a step of exhausting air in the inside space 51 formed in the binding step to the outside through the exhaust hole 55 so as to depressurize the entirety of the inside space 51 to a prescribed degree of vacuum (e.g., degree of vacuum of 0.1 Pa or lower). The sealing step is performed subsequent to the evacuation step. The sealing step is a step of sealing the exhaust hole 55 to form the glass panel unit 90 having the inside space 51 depressurized.

In the glass panel unit 90 of the embodiment, the first glass plate 15 is ground glass having the rough surface 6. Thus, the entirety of the glass panel unit 90 is semi-transparent or non-transparent. The rough surface 6 faces the inside space 51, and therefore, water is prevented from adhering to the rough surface 6. This suppresses the glass panel unit 90 which is semi-transparent or non-transparent from becoming see-through due to adhesion of water.

Additionally, each pillar 4 has a portion which is to be pressed against the rough surface 6 and which is provided with the protection layer 41 made of a resin different from a resin of which the body 40 is made. Thus, it is possible to impart, to the body 40, a property of being less susceptible to deformation (higher hardness) than the protection layer 41 and impart, to the protection layer 41, a property of being less susceptible to damage than the body 40. Thus, it is possible to reduce the occurrence of damage such as a crack in each pillar 4 when each pillar 4 is pressed against the rough surface 6. Moreover, even when the protection layer 41 is damaged, spreading of the damage to the body 40 is reduced.

Note that the material for the protection layer 41 is not limited to the resin, but the protection layer 41 may be made of metal. In this case, the protection layer 41 may be made of hard metal or may be made of soft metal such as silver, aluminum, or tin.

Next, various types of variations of the glass panel unit 90 of the embodiment will be described with reference to the attached drawings. Note that in the following description and drawings of first and second variations, components similar to those described above are denoted by the same reference signs, and the description thereof will be omitted.

### First Variation

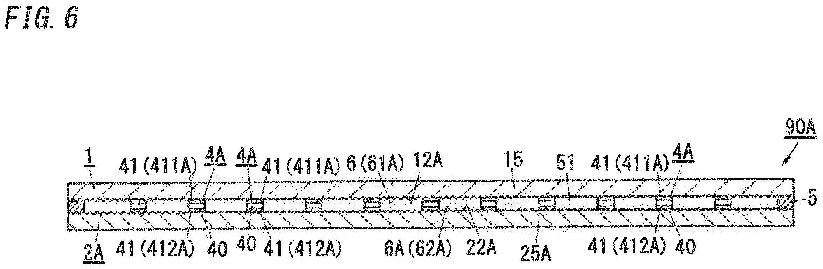

FIG. 6 schematically shows a cross section of a glass panel unit 90A of the first variation.

In the first variation, a second substrate 2A does not include the low radiation film 27 of the embodiment, and the second substrate 2A has a facing surface 22A facing a first substrate 1, and the facing surface 22A is a surface of a second glass plate 25A. The facing surface 22A is a rough surface 6A having a large number of fine recesses and projections. In the following description, a rough surface 6 of the first substrate 1 is referred to as a first rough surface 61A, and the rough surface 6A of the second substrate 2A is referred to as a second rough surface 62A.

Pillars 4A each include a second protection layer 412A in addition to a body 40 and a first protection layer 411A as a protection layer 41. The second protection layer 412A is a protection layer 41 different from the first protection layer 411A.

The second protection layer 412A is formed on an end surface on an opposite side of the body 40 from the first protection layer 41A. That is, in the present variation, the body 40 has a surface facing the first substrate 1 and a surface facing the second substrate 2A, and the protection layers 41 are provided on both the surfaces. In other words, each pillar 4A includes a pair of protection layers 41 formed on opposite end surfaces of the body 40.

The first protection layer 411A has a surface which is on an opposite side from the body 40 and which is pressed against the first rough surface 61A. The second protection layer 412A has a surface which is on an opposite side from the body 40 and which is pressed against the second rough surface 62A.

In the first variation, a first glass plate 15 is formed of ground glass having the first rough surface 61A, and the second glass plate 25A is formed of ground glass having the second rough surface 62A. Thus, the entirety of the glass panel unit 90A is semi-transparent or non-transparent. The first rough surface 61A and the second rough surface 62A both face an inside space 51, and therefore, adhesion of water is prevented.

Moreover, the portions of each pillar 4A, which are pressed against the first rough surface 61A and the second rough surface 62A, are provided with the first protection layer 411A and the second protection layer 412A, thereby reducing the occurrence of damage such as a crack in the body 40 made of the hard resin. Moreover, even if at least one of the first protection layer 411A or the second protection layer 412A is damaged, spreading of the damage to the body 40 is reduced.

Also in the first variation, materials for the first protection layer 411A and the second protection layer 412A are not limited to a resin, but both of the first protection layer 411A and the second protection layer 412A or one of the first protection layer 411A or the second protection layer 412A may be made of metal. Moreover, each of the first glass plate 15 and the second glass plate 25A may be formed of, for example, patterned glass or frosted glass.

### Second Variation

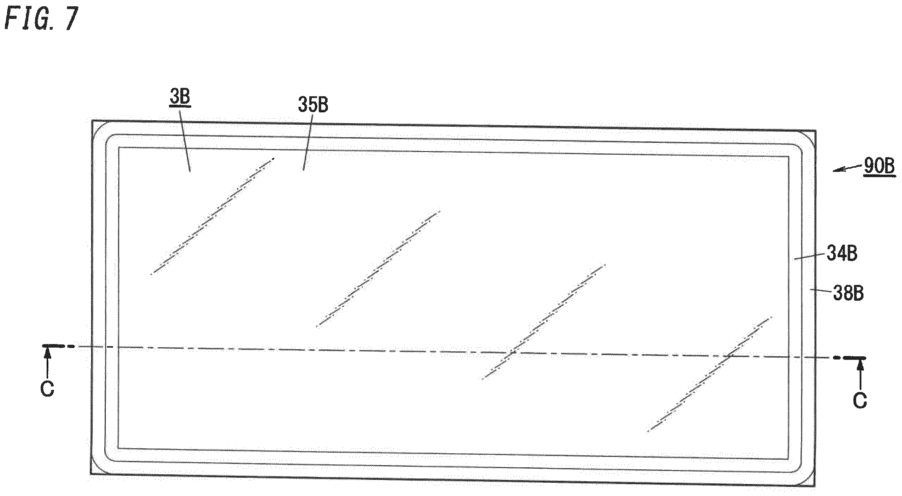

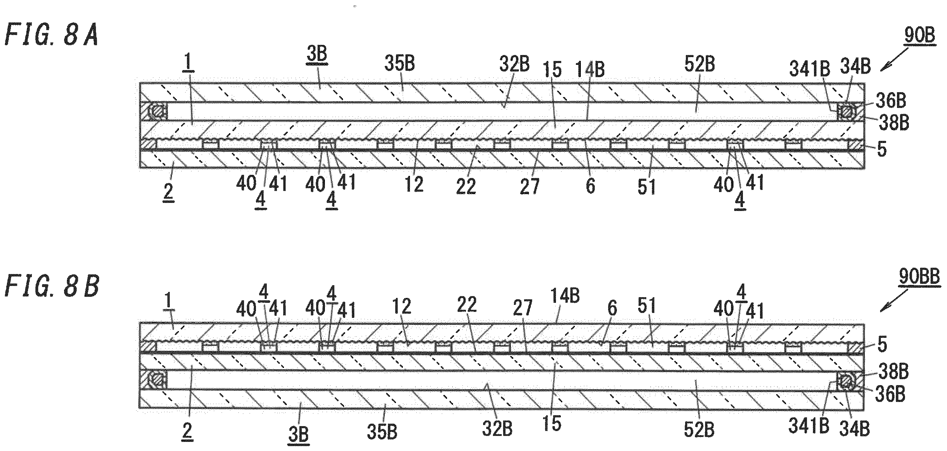

FIGS. 7 and 8A schematically show a glass panel unit 90B of the second variation.

The glass panel unit 90B of the second variation further includes a third substrate 3B and a second seal member 38B.

As illustrated in FIG. 8A, the third substrate 3B is located to face a first substrate 1. The third substrate 3B is a third glass plate 35B. The third substrate 3B has a facing surface 32B facing the first substrate 1. The facing surface 32B is one surface in a thickness direction of the third glass plate 35B.

Note that the third substrate 3B includes at least the third glass plate 35B. For example, the third substrate 3B may be provided with a coating. Moreover, the third substrate 3B is transparent generally but may be semi-transparent or non-transparent.

The second seal member 38B hermetically binds entire peripheral portions of a first substrate 1B and the third substrate 3B together. The second seal member 38B is made of, for example, a highly airtight resin such as silicone resin or butyl rubber. The second seal member 38B is sandwiched between the first substrate 1 and the third substrate 3B. The second seal member 38B has a frame shape.

The first substrate 1 has a facing surface 14B facing the third substrate 3B. The facing surface 14B is a surface of a first glass plate 15B and is located on an opposite side from a rough surface 6.

The second seal member 38B is sandwiched between the first substrate 1 and the third substrate 3B. The second seal member 38B is hermetically bound to an entire peripheral portion of the facing surface 14B of the first substrate 1 and is hermetically bound to an entire peripheral portion of the facing surface 32B of the third substrate 3B.

The glass panel unit 90B has a second inside space 52B which is formed between the first substrate 1 and the third substrate 3B and which is surrounded by the first substrate 1, the third substrate 3B, and the second seal member 38B. The second inside space 52B is sealed up with the second seal member 38B.

The glass panel unit 90B of the present variation includes a spacer 34B and desiccant 36B. The spacer 34B having a frame shape is disposed in an area surrounded by the second seal member 38B having a frame shape.

The spacer 34B is made of metal such as aluminum. The spacer 34B is hollow. In the spacer 34B, an inside space is formed. That is, the spacer 34B has a hollow portion.

The spacer 34B has a through hole 341B. The through hole 341B is open to an inner surface of the spacer 34B and an outer surface of the spacer 34B. The hollow portion (inside space) of the spacer 34B communicates with the second inside space 52B via the through hole 341B.

The hollow portion (inside space) of the spacer 34B is filled with the desiccant 36B. The desiccant 36B is, for example, silica gel.

The second inside space 52B is a space sealed up with the first substrate 1, the third substrate 3B, and the second seal member 38B. The second inside space 52B is filled with a dry gas. The dry gas is, for example, a dry rare gas such as argon gas or dry air. The dry air includes air dried after sealed in the second inside space 52B due to the effect of the desiccant 36B.

The glass panel unit 90B of the second variation exhibits a high thermal-insulating property because the glass panel unit 90B has an inside space 51 and the second inside space 52B between the third substrate 3B and the second substrate 2 located at either end in a thickness direction of the glass panel unit. The inside space 51 is a space depressurized to a prescribed degree of vacuum. The second inside space 52B is a space filled with a dry gas.

Note that the location of the third substrate 3B is not limited to a location facing the first substrate 1. The third substrate 3B is at least located to face the first substrate 1 or the second substrate 2.

FIG. 8B shows a glass panel unit 90BB including a third substrate 3B located to face a second substrate 2. In the glass panel unit 90BB, a second seal member 38B is located between the second substrate 2 and the third substrate 3B. Moreover, the second seal member 38B is bound to peripheral portions of the second substrate 2 and the third substrate 3B, thereby forming a second inside space 52B between the second substrate 2 and the third substrate 3B.

A method for manufacturing the glass panel unit 90B of the second variation includes a second binding step in addition to the above-described pillar disposition step, binding step, evacuation step, and sealing step. The second binding step is a step of binding the third substrate 3B to the first substrate 1 (or second substrate 2) via the second seal member 38B.

### Glass Window

Next, the glass window 9 including the glass panel unit 90 of the embodiment will be described.

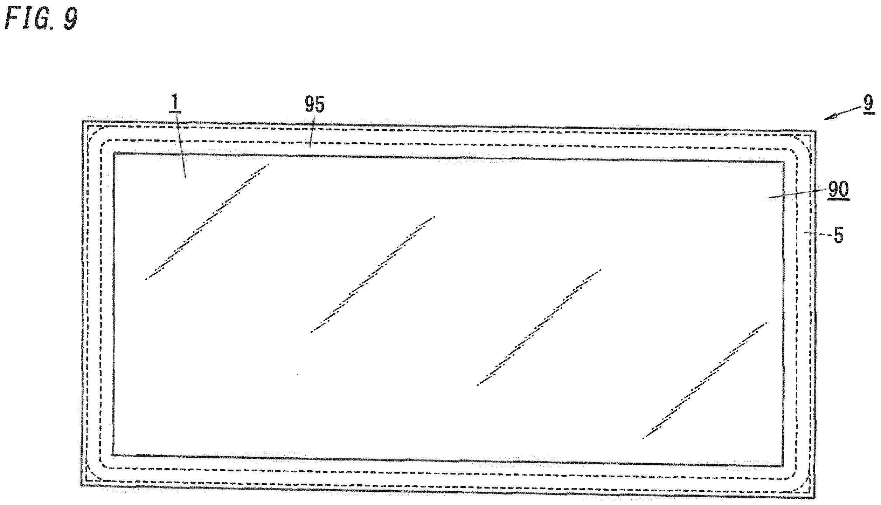

The glass window 9 shown in FIG. 9 includes the glass panel unit 90 of the embodiment, and a window frame 95 having a rectangular frame shape. The glass panel unit 90 is fit to an inner side of the window frame 95. That is, the window frame 95 is fit to a peripheral part of the glass panel unit 90. In the glass window 9, when viewed from the front side, the seal member 5 of the glass panel unit 90 is preferably located to be covered with the window frame 95.

The method for manufacturing the glass window 9 includes a fitting step of fitting the window frame 95 to the glass panel unit 90 in addition to the steps for manufacturing the glass panel unit 90. Note that the glass window 9 may include, in place of the glass panel unit 90 of the embodiment, the glass panel unit 90A of the first variation, or the glass panel unit 90B of the second variation.

## Claims

1. A glass panel unit (90), comprising:
a first substrate (1) including a first glass plate (15);
a second substrate (2) including a second glass plate (25) and being located to face the first substrate (1);
a seal member (5) having a frame shape, the seal member (5) hermetically binding peripheral portions of the first substrate (1) and the second substrate (2) together to form an inside space (51) hermetically closed in a reduced pressure state between the first substrate (1) and the second substrate (2); and
a plurality of pillars (4) being disposed in the inside space (51) and being in contact with facing surfaces (12,22) of the first substrate (1) and the second substrate (2), the facing surfaces (12,22) facing each other, wherein
the facing surface (12) of the first substrate (1) including a rough surface (6),
each of the plurality of pillars (4) including
a body (40) made of a resin and
a protection layer (41) being on the body (40) to be in contact with the rough surface (6), wherein
the protection layer (41) has a thickness greater than an arithmetic mean roughness of the rough surface (6).

2. The glass panel unit (90) of claim 1, wherein
the body (40) and the protection layer (41) are made of different resins.

3. The glass panel unit (90) of claim 2, wherein
the protection layer (41) has an elongation at break higher than an elongation at break of the body (40).

4. The glass panel unit (90) of claim 1, wherein
the protection layer (41) is made of metal.

5. The glass panel unit (90) of any one of claims 1 to 4, wherein
the body (40) is in contact with the facing surface (22) of the second substrate (2).

6. The glass panel unit (90A) of any one of claims 1 to 4, wherein
the facing surface (22) of the second substrate (2A) includes a rough surface (6A), and
each of the plurality of pillars (4A) includes
a first protection layer (411A) which is the protection layer (41) and
a second protection layer (412A) which is in contact with the rough surface (6A) of the second substrate (2A) and which is different from the first protection layer (411A).

7. The glass panel unit (90B) of any one of claims 1 to 6, further comprising:
a third substrate (3B) including a third glass plate (35B) and facing a substrate which is one of the first substrate (1) or the second substrate (2); and
a second seal member (38B) having a frame shape, the second seal member (38B) being located between the substrate and the third substrate (3B) to hermetically bind the substrate and the third substrate (3B) together to form a second inside space (52B) hermetically closed between the substrate and the third substrate (3B).

8. A glass window (9), comprising:
the glass panel unit (90) of any one of claims 1 to 7; and
a window frame (95) to inner side of which the glass panel unit (90) is fit.

## Patentansprüche

1. Glasscheibeneinheit (90), umfassend:
ein erstes Substrat (1), welches eine erste Glasplatte (15) einschließt;
ein zweites Substrat (2), welches eine zweite Glasplatte (25) einschließt und sich gegenüber dem ersten Substrat (1) befindet;
ein Dichtungselement (5) mit einer Rahmenform, wobei das Dichtungselement (5) die peripheren Abschnitte des ersten Substrats (1) und des zweiten Substrats (2) hermetisch miteinander verbindet, um einen Innenraum (51) hermetisch abgeschlossen in einem Zustand reduzierten Drucks zwischen dem ersten Substrat (1) und dem zweiten Substrat (2) zu bilden; und
eine Mehrzahl an Säulen (4), welche in dem Innenraum (51) angeordnet sind und in Kontakt mit den zugewandten Oberflächen (12,22) des ersten Substrats (1) und des zweiten Substrats (2) sind, wobei die zugewandten Oberflächen (12,22) einander gegenüberliegen, wobei
die zugewandte Oberfläche (12) des ersten Substrats (1) eine raue Oberfläche (6) einschließt,
jede der Mehrzahl an Säulen (4)
einen Körper (40), bestehend aus einem Harz und
eine Schutzschicht (41), welche auf dem Körper (40) ist, um in Kontakt mit der rauen Oberfläche (6) zu sein, einschließt,
wobei die Schutzschicht (41) eine Dicke aufweist, welche größer ist als eine arithmetische Durchschnittsrauheit der rauen Oberfläche (6).

2. Glasscheibeneinheit (90) nach Anspruch 1, wobei
der Körper (40) und die Schutzschicht (41) aus verschiedenen Harzen bestehen.

3. Glasscheibeneinheit (90) nach Anspruch 2, wobei
die Schutzschicht (41) eine größere Bruchdehnung als eine Bruchdehnung des Körpers (40) aufweist.

4. Glasscheibeneinheit (90) nach Anspruch 1, wobei
die Schutzschicht (41) aus Metall besteht.

5. Glasscheibeneinheit (90) nach einem der Ansprüche 1 bis 4, wobei
der Körper (40) in Kontakt mit der zugewandten Oberfläche (22) des zweiten Substrats (2) ist.

6. Glasscheibeneinheit (90A) nach einem der Ansprüche 1 bis 4, wobei
die zugewandte Oberfläche (22) des zweiten Substrats (2A) eine raue Oberfläche (6A) einschließt, und
jede der Mehrzahl an Säulen (4A)
eine erste Schutzschicht (411A), welche die Schutzschicht (41) ist, und
eine zweite Schutzschicht (412A), welche in Kontakt mit der rauen Oberfläche (6A) des zweiten Substrats (2A) ist und welche verschieden von der ersten Schutzschicht (411A) ist, einschließt.

7. Glasscheibeneinheit (90B) nach einem der Ansprüche 1 bis 6, weiter umfassend:
ein drittes Substrat (3B), welches eine dritte Glasplatte (35B) einschließt und einem Substrat gegenüberliegt, welches eines des ersten Substrats (1) oder des zweiten Substrats (2) ist;
ein zweites Dichtungselement (38B) mit einer Rahmenform, wobei das zweite Dichtungselement (38B) sich zwischen dem Substrat und dem dritten Substrat (3B) befindet, um das Substrat und das dritte Substrat (3B) hermetisch miteinander zu verbinden, um einen zweiten Innenraum (52B) hermetisch abgeschlossen zwischen dem Substrat und dem dritten Substrat (3B) zu bilden.

8. Glasfenster (9), umfassend:
die Glasscheibeneinheit (90) nach einem der Ansprüche 1 bis 7; und
einen Fensterrahmen (95), an dessen Innenseite die Glasscheibeneinheit (90) angebracht ist.

## Revendications

1. Module de panneau de verre (90) comprenant :
un premier substrat (1) incluant une première plaque de verre (15) ;
un deuxième substrat (2) incluant une deuxième plaque de verre (25) et qui est situé pour être tourné vers le premier substrat (1) ;
un élément de joint (5) ayant une forme de cadre, l'élément de joint (5) assemblant hermétiquement des portions périphériques du premier substrat (1) et du deuxième substrat (2) ensemble pour former un espace intérieur (51) hermétiquement fermé dans un état de pression réduite entre le premier substrat (1) et le deuxième substrat (2) ; et
une pluralité de colonnes (4) étant disposées dans l'espace intérieur (51) et étant en contact avec des surfaces en regard (12, 22) du premier substrat (1) et du deuxième substrat (2), les surfaces en regard (12, 22) étant tournées l'une vers l'autre, dans lequel
la surface en regard (12) du premier substrat (1) incluant une surface rugueuse (6),
chacune de la pluralité de colonnes (4) incluant
un corps (40) réalisé en une résine et
une couche de protection (41) qui est sur le corps (40) pour être en contact avec la surface rugueuse (6), dans lequel
la couche de protection (41) a une épaisseur supérieure à une rugosité moyenne arithmétique de la surface rugueuse (6).

2. Module de panneau de verre (90) selon la revendication 1, dans lequel
le corps (40) et la couche de protection (41) sont réalisés en différentes résines.

3. Module de panneau de verre (90) selon la revendication 2, dans lequel
la couche de protection (41) a un allongement à la rupture supérieur à un allongement à la rupture du corps (40).

4. Module de panneau de verre (90) selon la revendication 1, dans lequel
la couche de protection (41) est réalisée en métal.

5. Module de panneau de verre (90) selon l'une quelconque des revendications 1 à 4, dans lequel
le corps (40) est en contact avec la surface en regard (22) du deuxième substrat (2).

6. Module de panneau de verre (90A) selon l'une quelconque des revendications 1 à 4, dans lequel
la surface en regard (22) du deuxième substrat (2A) inclut une surface rugueuse (6A), et
chacune de la pluralité de colonnes (4A) inclut
une première couche de protection (411A) qui est la couche de protection (41) et une seconde couche de protection (412A) qui est en contact avec la surface rugueuse (6A) du deuxième substrat (2A) et qui est différente de la première couche de protection (411A).

7. Module de panneau de verre (90B) selon l'une quelconque des revendications 1 à 6, comprenant en outre :
un troisième substrat (3B) incluant une troisième plaque de verre (35B) et tourné vers un substrat qui est un du premier substrat (1) ou du deuxième substrat (2) ; et
un second élément de joint (38B) ayant une forme de cadre, le second élément de joint (38B) étant situé entre le substrat et le troisième substrat (3B) pour assembler hermétiquement le substrat et le troisième substrat (3B) ensemble pour former un second espace intérieur (52B) hermétiquement fermé entre le substrat et le troisième substrat (3B).

8. Vitre (9) comprenant
le module de panneau de verre (90) selon l'une quelconque des revendications 1 à 7 ; et
un châssis de fenêtre (95) sur le côté interne duquel le module de panneau de verre (90) est ajusté.
